# EUROPEAN PATENT APPLICATION

(11) **EP 1 582 254 A1**
(43) Date of publication of application: **05.10.2005**
(21) Application number: 05251928.7
(22) Date of filing: 29.03.2005
(51) Int. Cl.: B01J 19/00

(54) **Member for producing a probe array and probe array producing method**

(30) Priority: 29.03.2004 JP 2004097230
(71) Applicant: Lintec Corporation, Tokyo 173-0001 (JP); RIKEN, Saitama 351-0198 (JP)
(72) Inventor: Yamamoto, Yuko, Itabashi-ku, Tokyo 173-0016 (JP); Okabe, Hideaki, Chigasaki-shi, Kanagawa 253-0011 (JP); Tashiro, Hideo, Wako-shi, Saitama 351-0198 (JP); Kondoh, Yasumitsu, Wako-shi, Saitama 351-0198 (JP)
(74) Representative: Nicholls, Michael John

(57) **Abstract**

In order to provide a member for producing a probe array that allows producing desired probe arrays immediately once the probe arrangement is established, and to provide a probe array producing method that uses this member for producing a probe array, the pieces F₁, F₂ ... Fₙ are produced by cutting the members M₁, M₂ ... Mₙ for producing a probe array, and a predetermined number of pieces F₁, F₂ ... Fₙ are detached from a release sheet 13 and are attached via the adhesive layer 12 onto the supporting member 2a at predetermined locations.

## Description

### BACKGROUND OF THE INVENTION

### Field of the Invention

The present invention relates to a member for producing a probe array, and to a probe array and a probe array producing method that use the member for producing a probe array.

### Description of the Related Art

In recent years probe arrays such as DNA chips, protein chips, etc., have been developed wherein probes (for instance, biological substances such as DNA, proteins, etc.) that can react with a target substance are immobilized onto a plate-like substrate of glass, silicon, etc., in order to detect a target substance.

As a method for producing a probe array, a method wherein a probe-containing liquid taken up in a spotting pin is spotted onto specific positions on a substrate (U.S. Patent No. 5,807,522) is known. As a method for producing a DNA chip, a method wherein oligonucleotides are synthesized directly on a substrate by photolithographic techniques used in semiconductor producing (U.S. Patent No. 5,424,186) is known.

### SUMMARY OF THE INVENTION

In the conventional producing methods above, producing of the probe array can only begin after the probe arrangement, i.e. probe types and positions, is established, and requires therefore a certain amount of time from producing start until producing end.

Thus, the conventional producing methods above are suitable for situations where there is an ample time lag between establishing the probe arrangement and using the probe array, as is the case with pre-established probe arrangements.

However, the conventional producing methods above are not suitable for situations where there is not a sufficient time lag between establishing the probe arrangement and using the probe array, such as when the probe arrangement is not decided until just prior to probe array use, or where ad-hoc changes in the probe arrangement are desired.

Also, in the conventional producing methods above, the probe amount prepared for producing the probe array is larger than the probe amount effectively immobilized onto the substrate, thus a portion of the prepared probes does not become immobilized onto the substrate and is wasted. For instance, since the amount of probe-containing liquid soaked up in a spotting pin is larger than the amount of the probe-containing liquid consumed in one spotting dispensing, the probe-containing liquid remains in the spotting pin after spotting. However, the remaining probe-containing liquid in the spotting pin cannot be reused, and is therefore wasted. With a view to using probes more effectively, it has been proposed to produce further probe arrays by using the remaining probes. The probe arrangements in the probe arrays thus produced, however, depend on the amount and type of the remaining probes, which does not ensure the production of the desired probe array in all cases.

Furthermore, in the conventional producing methods above, different types of probes are immobilized onto one substrate, which does not allow optimizing the immobilization of the probes onto the substrate in accordance with probe type.

On the other hand, in ordinary target substance detection methods using probe arrays, a liquid sample containing the target substance is added onto a plate-like substrate and is then covered by a cover-glass, etc., to avoid drying; after reaction of the probe with the target substance, the probe array is washed and substances other than the target substance are removed, after which is carried out detection of a labeling substance (such as a fluorescent substance, an enzyme, etc.), bonded beforehand to the target substance. Herein, a number of manual operations must be carried out, such as taking up minute liquid samples with a micropipette and adding them uniformly onto a plate-like substrate, covering the samples with a cover glass, removing the cover glass after reaction, and washing uniformly the plate-like substrate, all of them extremely delicate operations in which the manipulation of the operator can result in greatly diverging results. Thus, result reproducibility becomes difficult to achieve. By contrast, if a probe array with probes immobilized on the inner face of a tubular member is used, the easy operation of flowing a liquid sample, a wash solution, etc., into and out of the hollow portion of the tubular member allows detecting target substances with a good reproducibility.

In the conventional producing methods above, however, immobilizing probes onto the inner face of a tubular member is difficult.

Thus, a first object of the present invention is to provide a member for producing a probe array that allows producing desired probe arrays immediately once the probe arrangement is established.

A second object of the present invention is to provide a member for producing a probe array that allows using effectively the probes prepared for probe array production.

A third object of the present invention is to provide a member for producing a probe array that allows optimizing the immobilization of probes onto a substrate depending on probe type.

A fourth object of the present invention is to provide a member for producing a probe array that allows easily immobilizing probes onto the inner face of a tubular member.

A fifth object of the present invention is to provide a probe array produced using the aforementioned member for producing a probe array.

A sixth object of the present invention is to provide a probe array producing method using the aforementioned member for producing a probe array.

In order to solve the above problems, the present invention provides a member for producing a probe array comprising a substrate, probes immobilized on a first region of the surface of the substrate and an adhesive layer provided on a second region of the surface of the substrate.

The member for producing a probe array according to the present invention can be attached via the adhesive layer on a supporting member in such a way that the probes are exposed. Similarly, a piece of the member for producing a probe array according to the present invention comprising the first region and the second region of the surface of the substrate can be attached via the adhesive layer on a supporting member in such a way that the probes are exposed.

A probe array can be produced thus by attaching and arranging the member for producing a probe array according to the present invention or a piece thereof on the surface of a supporting member.

The arrangement of probes in the probe array can be set arbitrarily through the arrangement of the member for producing a probe array or a piece thereof. Therefore, once the probe arrangement is established, the desired probe array can be produced immediately by attaching and arranging the member for producing a probe array according to the present invention or a piece thereof on the surface of a supporting member, in accordance with the probe arrangement.

The member for producing a probe array is produced using all the probes prepared for probe array production. The member for producing a probe array or a piece thereof that is not used for producing a probe array can be stored for future use. This affords an effective use of probes prepared for probe array production. When storing the member for producing a probe array or a piece thereof, the adhesive layer is preferably protected by a release sheet laminated thereon.

In the member for producing a probe array according to the present invention, it is possible to immobilize different types of probes onto different substrates, which allows optimizing the immobilization of probes onto a given substrate depending on probe type.

The probes can be easily immobilized onto the inner face of a tubular member by attaching via the adhesive layer the member for producing a probe arrays according to the present invention or a piece thereof on the inner face of a tubular member.

The configuration of the substrate in the member for producing a probe array according to the present invention is not particularly restricted, and the positions of the first and second regions are not particularly restricted either, provided they occupy different regions on the substrate surface. Preferably, the substrate is a sheet-like substrate, the first region is positioned on one face of the sheet-like substrate, and the second region is positioned on the other face of the sheet-like substrate. This allows producing easily a piece of the member for producing a probe array comprising the first region and the second region of the surface of the substrate.

The types of probes immobilized onto the first region of the member for producing a probe array according to the present invention is not particularly restricted, but preferably only one type of probes are immobilized onto the first region. In probe arrays produced using such a member for producing probe arrays or a piece thereof, there is a greater degree of freedom as regards probe combinations, which permits a wide variety of probe arrangment. In the first region, moreover, there need not be a correspondence between probe position and probe type, which facilitates the immobilization of probes onto the first region.

In order to solve the above problems, the present invention provides a probe array comprising a supporting member and the member for producing a probe array according to the present invention, or a piece thereof, arranged on the surface of the supporting member, wherein the member for producing a probe array or the piece thereof is attached via the adhesive layer on the supporting member in such a way that the probes are exposed.

In the probe array according to the present invention, preferably, the supporting member is a tubular member, and the member for producing a probe array or the piece thereof is attached on the inner face of the tubular member. Thus, the easy operation of flowing a liquid sample, a wash solution, etc., into and out of the hollow portion of the tubular member allows detecting target substances with a good reproducibility.

In the probe array according to the present invention, preferably, the probe array further comprises a tubular member, and the supporting member is housed in the hollow portion of the tubular member in such a way that the probes are exposed to the hollow portion of the tubular member. According to this embodiment, the easy operation of flowing a liquid sample, a wash solution, etc., into and out of the hollow portion of the tubular member allows detecting target substances with a good reproducibility. In this embodiment, preferably, a spacer for preventing contact between the outer face of the supporting member and the inner face of the tubular member is provided on the outer face of the supporting member or on the inner face of the tubular member. Thereby, the probes immobilized onto the supporting member can reliably come into contact with a liquid sample, a wash solution, etc., flowed into the hollow portion of the tubular member, which increases reaction efficiency and washing efficiency, and results in a better accuracy in the detection of the target substance.

In order to solve the above problems, the present invention provides a method for producing a probe array comprising a supporting member, and the member for producing a probe array according to the present invention, or a piece thereof, arranged on the surface of the supporting member, the method comprising a step of attaching via the adhesive layer the member for producing a probe array or the piece thereof on the supporting member in such a way that the probes are exposed.

In the probe array producing method according to the present invention, the arrangement of probes in the probe array can be adjusted arbitrarily through the arrangement of the member for producing a probe array or a piece thereof. Therefore, once the probe arrangement is established, the desired probe array can be produced immediately by attaching and arranging the member for producing a probe array according to the present invention, or a piece thereof, on the surface of the supporting member, in accordance with the probe arrangement.

In the probe array producing method according to the present invention, preferably, the supporting member is a tubular member, and in the step the member for producing a probe array or the piece thereof is attached on the inner face of the tubular member. According to this embodiment, the probes can be easily immobilized onto the inner face of the tubular member by attaching via the adhesive layer the member for producing a probe array or the piece thereof on the inner face of the tubular member.

In the probe array producing method according to the present invention, preferably, the probe array further comprises a tubular member, and the method further comprises a step of housing the supporting member in the hollow portion of the tubular member in such a way that the probes are exposed to the hollow portion of the tubular member. According to this embodiment, the probes can be easily be arranged inside the hollow portion of the tubular member by housing the supporting member on which the member for producing a probe array or the piece thereof is attached via the adhesive layer, in the hollow portion of the tubular member.

The present invention has therefore the following effects. First, the invention provides a member for producing a probe array that allows producing desired probe arrays immediately once the probe arrangement is established. Second, the invention provides a member for producing a probe array that allows using effectively the probes prepared for probe array production. Third, the invention provides a member for producing a probe array that allows optimizing the immobilization of probes onto a substrate depending on probe type. Fourth, the invention provides a member for producing a probe array that allows easily immobilizing probes onto the inner face of a tubular member. Fifth, the invention provides a probe array produced using the member for producing a probe array. Sixth, the invention provides a probe array producing method using the member for producing a probe array.

### BRIEF DESCRIPTION OF THE DRAWINGS

FIG. 1 is a perspective view of an embodiment of a member for producing a probe array;
FIG. 2 is a perspective view of an embodiment of piece produced by cutting a member for producing a probe array;
FIG. 3 is a perspective view of another embodiment of piece produced by cutting a member for producing a probe array;
FIG. 4 is a perspective view of an embodiment of a probe array producing step;
FIG. 5 is a perspective view of an embodiment of a probe array;
FIG. 6 (a) is a plane view of another embodiment of a probe array;
FIG. 6(b) is a cross-sectional view of the above embodiment along the line X - X;
FIG. 7 (a) is a plane view of another embodiment of a probe array; and
FIG. 7(b) is a cross-sectional view of the above embodiment along the line X - X.

### DESCRIPTION OF THE PREFERRED EMBODIMENTS

The present invention is described in detail below with reference to the drawings.

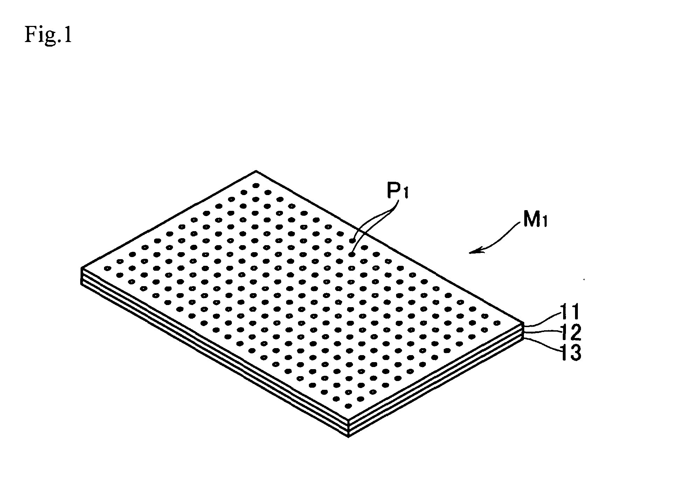

As shown in FIG. 1, a member M₁ for producing a probe array according to the present embodiment comprises a substrate 11 in the form of a rectangular sheet, probes P₁ immobilized on the upper surface of the substrate 11, an adhesive layer 12 laminated on the lower surface of the substrate 11, and a release sheet 13 laminated on the lower surface of the adhesive layer 12.

The material of the substrate 11 is not particularly restricted provided the probes P₁ can be immobilized onto its surface and it is insoluble in a number of liquids used in experimental operations (e.g. a liquid sample, a washing liquid, etc.), and may include for instance plastics, inorganic polymers, metals, natural polymers, glass, ceramics, etc., as well as composites thereof.

Examples of plastics include thermoplastic resins such as polyethylene resins, e.g. polyethylene, polyethylene copolymer (for instance, ethylene-ethyl acrylate copolymer, ethylene-vinyl acetate copolymer), etc.; polypropylene; polystyrene resins, e.g. polystyrene, polystyrene copolymer (for instance, acrylonitrile-styrene copolymer, acrylonitrile-styrene-butadiene copolymer), etc.; vinyl chloride resins; vinylidene chloride resins; fluoroplastics, e.g. polytetrafluoroethylene, etc.; acrylic resins, e.g. polymethyl methacrylate, polyacrylonitrile, etc.; polyesters, e.g. polyethylene terephthalate, polyethylene naphthalate, polybutylene terephthalate; polycarbonate, etc. Examples of inorganic polymers include for instance polymers having -Si-O- bonds, -P-N- bonds, etc. Examples of metals include for instance gold, platinum, aluminum, etc. Examples of natural polymers include for instance cellulose, proteins, isoprene polymers, etc.

The substrate 11 may be porous or non-porous. In case that the substrate 11 is porous, the substrate 11 has a greater surface area, which allows immobilizing more probes on the surface thereof.

The substrate 11 is for instance a sheet made of the above-listed thermoplastic resins or a laminate sheet thereof, and has for instance a thickness of 10 to 1000 µm.

In the present embodiment, the probes P₁ are immobilized substantially all over the upper surface of the substrate 11, but the surface areas and positions of the regions in which the probes P₁ are immobilized can be arbitrarily adjusted. The surface area of the regions in which the probes P₁ are immobilized is preferably set so as to allow the immobilization of all the prepared probes P₁. This enables an efficient use of all the prepared probes P₁.

The shape of the substrate 11 in the present embodiment is, though not particularly restricted to, a rectangular sheet-like shape, with arbitrary modifications allowed. The shape of the substrate 11 may be for instance a circular sheet-like shape, etc.

As shown in FIG. 1, only one type of probes P₁ is immobilized on the upper surface of the substrate 11. The probes P₁ are not particularly restricted provided they can react with target substances and include, for instance biological substances such as nucleic acids, proteins, antigens, antibodies, enzymes, sugar chains, etc., while combinations of probe and target substance include for instance nucleic acids / complementary nucleic acids, receptor proteins / ligands, enzymes / substrates, antibodies / antigens, etc. Nucleic acids herein include DNA, RNA, as well as analogues and derivatives thereof (for instance peptide nucleic acids (PNA), phosphorothioate DNA, etc.)

In the present embodiment, only one type of probes P₁ is immobilized on the surface of the substrate 11, but two or more types of probes can also be immobilized thereon. In the latter case, there must be a correspondence between probe type and probe position that allows identifying the probe type on the basis of the probe position.

The probes P₁ can attach on the surface of the substrate 11 by electrostatic binding or covalent binding, protein-protein interactions, protein-low molecular compound interactions, etc. In order to promote this immobilizing effect, the surface of the substrate 11 or the probes P₁ may be subjected to an appropriate chemical modification using conventional techniques.

In electrostatic binding, the surface of the substrate 11 is coated for instance with a polycationic substance. A "cationic substance" refers herein to a substance having cationic groups in its molecule. The cationic substance can form a conjugate with nucleic acid through electrostatic interaction. Cationic groups include for instance amino group; monoalkylamino groups such as methylamino group, ethylamino group, etc.; dialkylamino groups such as dimethylamino group, diethylamino group, etc.; imino group; guanidino group, etc. Cationic substances include for instance macromolecules having cationic groups; homopolymers or copolymers of basic amino acids such as polylysine, polyarginine, copolymers of lysine and arginine, etc., and derivatives thereof; polycationic polymers such as polyethyleneimine, etc.

In covalent binding, covalent bonds are formed using the functional groups present in the surface of the substrate 11 and in the probes P₁. Concrete examples of functional groups capable of forming covalent bonds include for instance carboxyl groups, amino groups, hydroxyl groups, etc. If there are carboxyl groups present in the surface of the substrate 11, these carboxyl groups may be activated with a carbodiimide such as 1-ethyl-3-(3-dimethylaminopropyl)-3-ethylcarbodiimide hydrochloride (EDC), etc., in order to react subsequently with the amino groups of the probes P₁, thus forming amide bonds between the substrate 11 and the probes P₁. If there are amino groups present in the surface of the substrate 11, these amino groups are transformed into carboxyl groups using a cyclic acid anhydride such as succinic acid anhydride, etc., in order to react subsequently with the amino groups of the probes P₁, thus forming amide bonds between the substrate 11 and the probes P₁.

Alternatively, the probes P₁ may be immobilized onto the substrate 11 by way of specific interactions such as streptavidin or avidin / biotin, maltose-binding protein / maltose, polyhistidine peptides / metallic ions such as nickel, cobalt, etc., glutathione-S-trasferase / glutathione, calmodulin / calmodulin-binding peptide, ATP binding proteins / ATP, nucleic acid / complementary nucleic acid, receptor protein / ligand, enzyme / substrate, antibody / antigen, IgG / protein A, etc.

The adhesive contained in the adhesive layer 12 is not particularly restricted, so long as it can form an adhesive layer, is insoluble, after immobilization, in a number of liquids used in experimental operations (e.g. a liquid sample, a washing liquid, etc.), and does not negatively affect such liquids. Such adhesives include for instance pressure-sensitive adhesives, chemical reaction adhesives, thermofusible adhesives, etc. Preferred herein are pressure-sensitive adhesives. Using a pressure-sensitive adhesive allows attaching easily and speedily the member for producing a probe array or a piece thereof onto a supporting member.

Examples of pressure-sensitive adhesives include, for instance, acrylic-based, polyester-based, urethane-based, rubber-based or silicone-based pressure-sensitive adhesives. Acrylic-based pressure-sensitive adhesives include for instance copolymers of at least one kind of (meth)acrylate esters such as n-butyl (meth)acrylate, hexyl (meth)acrylate, 2-diethyl butyl (meth)acrylate, isooctyl (meth)acrylate, 2-methoxyethyl (meth)acrylate, 2-ehtyl hexyl (meth)acrylate, decyl (meth)acrylate, dodecyl (meth)acrylate, tridecyl (meth)acrylate, etc., and functional monomers copolymerizable with these (meth)acrylate esters, such as (meth)acrylic acid, itaconic acid, maleic acid, maleic anhydride, hydroxyethyl acrylate, hydroxypropyl acrylate, acrylamide, dimethylacrylamide, methyl aminoethyl methacrylate, methoxyethyl (meth)acrylate, etc. Rubber-based pressure-sensitive adhesives include for instance a compound having as its major constituent a synthetic or natural rubber such as styrene-isoprene-styrene block copolymer rubbers, styrene-butadiene rubbers, polybutene rubbers, butyl rubbers, etc. Vinyl ether -based pressure-sensitive adhesives include for instance ethyl vinyl ether, propyl vinyl ether, butyl vinyl ether, 2-ethylhexyl vinyl ether, etc. Silicone-based pressure-sensitive adhesives include for instance a mixture and/or a polymer of dimethylsiloxane rubber and dimethylsiloxane resin, etc. The formulation of pressure-sensitive adhesives may be a solvent-based adhesive or an emulsion-based adhesive.

Chemical-reaction adhesives are adhesives that can solidify by polymerization reactions of their constituent components, and include for instance thermocurable adhesives wherein the chemical reaction is initiated by supply of external heat, photocurable or electron-beam curable adhesives wherein the chemical reaction is initiated by visible light, ultraviolet light, electron beams, etc. Examples of thermocurable adhesives include for instance epoxy-based adhesives, etc., while photocurable or electron-beam curable adhesives include for instance polyester acrylates, etc.

Thermofusible adhesives, which melt by heating and revert to their original state by cooling, are also called hot-melt adhesives, and include for instance polyolefins, ethylene/ vinyl acetate copolymers, etc.

The thickness of the adhesive layer 12 is for instance 5 to 50 µm.

The release sheet 13 may be a resin film, such as a polyethylene terephthalate film, a polypropylene film, etc.; or papers subjected to a release treatment, wherein a glassine paper, a clay-coat paper, a laminated paper (mainly a polyethylene laminated paper), etc., are treated with a silicone-based release agent. The thickness of the release layer 13 is for instance 25 to 200 µm.

The member M₁ for producing a probe array can be produced for instance through forming the adhesive layer 12 by preparing a coating containing the adhesive constituting the adhesive layer 12 and a solvent, applying the coating onto the release sheet 13, using coating equipment, and drying then the coating; and thereafter, laminating the substrate 11 onto the surface of the adhesive layer 12. Herein, the probes P₁ can be immobilized onto the substrate 11 before or after lamination of the substrate 11, preferably before lamination.

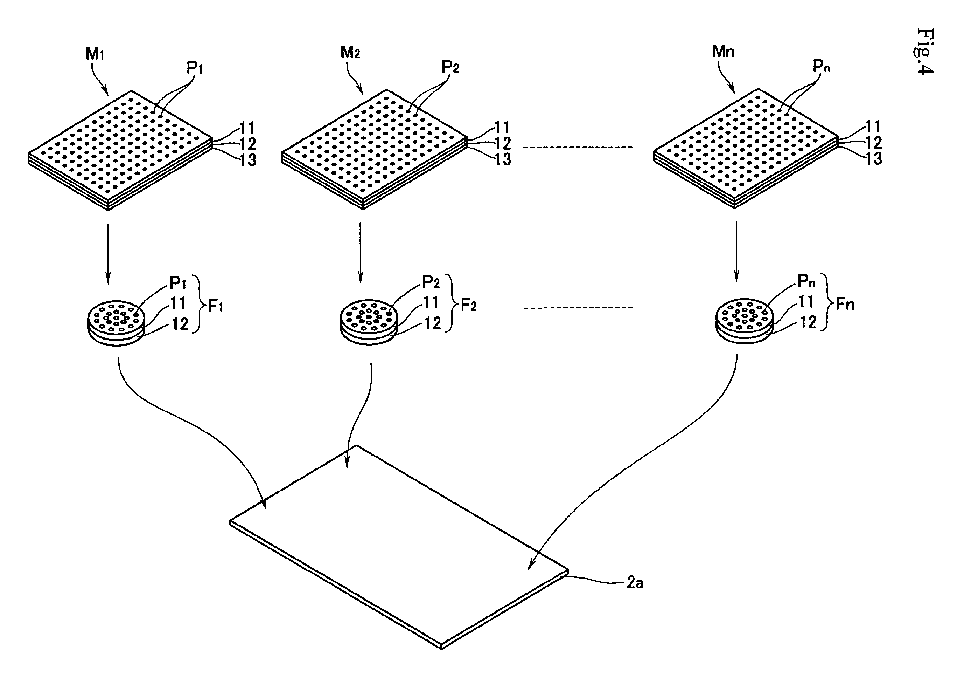

For producing a probe array with probes of mutually different types P₁, P₂ ... Pₙ (where n is an integer equal to 2 or greater, likewise hereinafter) arranged in a predetermined order, as shown in FIG. 4, the members M₁, M₂ ... Mₙ for producing a probe array with probes P₁, P₂ ... Pₙ respectively immobilized on the upper surface of the substrate 11, are prepared.

The constitution of the members M₂ ... Mₙ for producing a probe array is identical to that of the member M₁ for producing a probe array except that herein different types of probe are immobilized on the upper surface of the substrate 11. The material of the substrate 11 of the members M₁, M₂ ... Mₙ for producing a probe array can be suitably selected in accordance with the types of the probes P₁, P₂ ... Pₙ. This helps optimizing the immobilization method of the probes P₁, P₂ ... Pₙ onto the substrate 11 in accordance with probe type.

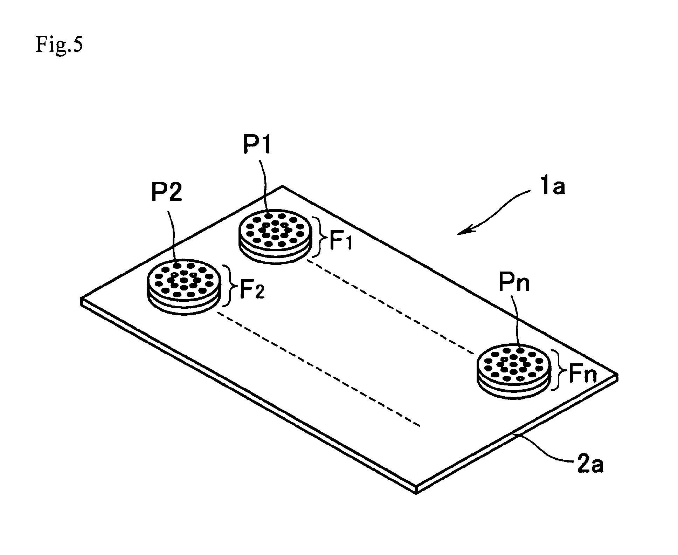

A probe array 1a, as shown in FIG. 5, comprising a plate-like supporting member 2a and pieces F₁, F₂ ... Fₙ of the members M₁, M₂ ... Mₙ for producing a probe array attached onto the plate-like supporting member 2a in a predetermined order, wherein the probes P₁, P₂ ... Pₙ are arranged on the plate-like supporting member 2a in a predetermined order, can be produced according to the steps 1a and 2a below.

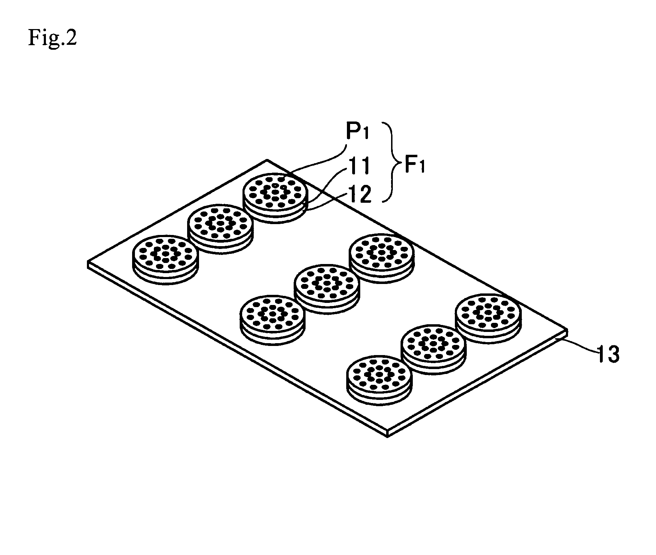

Step 1a: Circular sheet-like pieces F₁, F₂ ... Fₙ are produced by cutting the members M₁, M₂ ... Mₙ for producing a probe array in the thickness direction, as shown in FIG. 2 and FIG. 4.

Step 2a: As shown in FIG. 4, a predetermined number (1 in the present embodiment) of pieces F₁, F₂ ... Fₙ are detached from the release sheet 13 and are attached via the adhesive layer 12 onto the supporting member 2a, at predetermined locations. Since the probes P₁, P₂ ... Pₙ and the adhesive layer 12 are provided on the different face of the substrate 11, when the pieces F₁, F₂ ... Fₙ are attached to the supporting member 2a, the probes P₁, P₂ ... Pₙ are exposed on the supporting member 2a. The remaining pieces are kept attached to the release sheet 13, and can thereby be effectively stored for future use. Consequently, the remaining pieces can be effectively utilized.

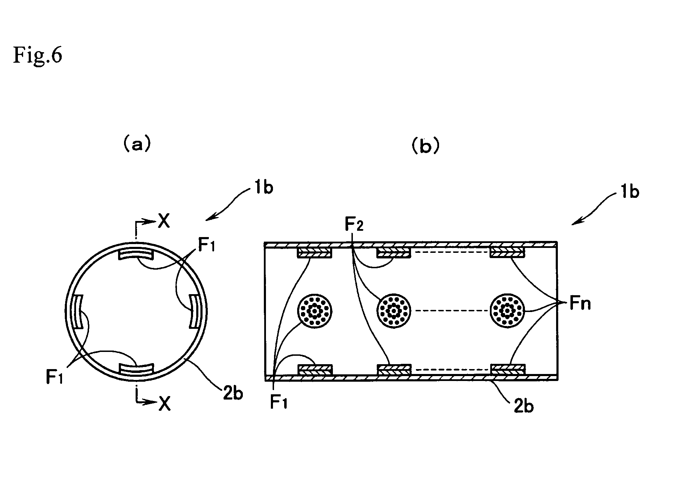

A probe array 1b, as shown in FIG. 6 (a) and 6(b), comprising a cylindrical supporting member 2b and pieces F₁, F₂ ... Fₙ of the members M₁, M₂ ... Mₙ for producing a probe array attached onto the inner face of the supporting member 2b in a predetermined order, wherein the probes P₁, P₂ ... Pₙ are arranged on the hollow portion of the supporting member 2b in a predetermined order, can be produced according to the steps 1b and 2b below.

Step 1b: Circular sheet-like pieces F₁, F₂ ... Fₙ are produced in the same way as in step 1a.

Step 2b: A predetermined number (4 in the present embodiment) of the pieces F₁, F₂ ... Fₙ are detached from the release sheet 13 and are attached via the adhesive layer 12 onto the inner face of the supporting member 2b, at predetermined locations. Since the probes P₁, P₂ ... Pₙ and the adhesive layer 12 are provided on the different face of the substrate 11, when the pieces F₁, F₂ ... Fₙ are attached onto the supporting member 2b, the probes P₁, P₂ ... Pₙ are exposed to the hollow portion of the supporting member 2b. The remaining pieces are kept attached to the release sheet 13, and can thereby be effectively stored for future use. Consequently, the remaining pieces can be effectively utilized.

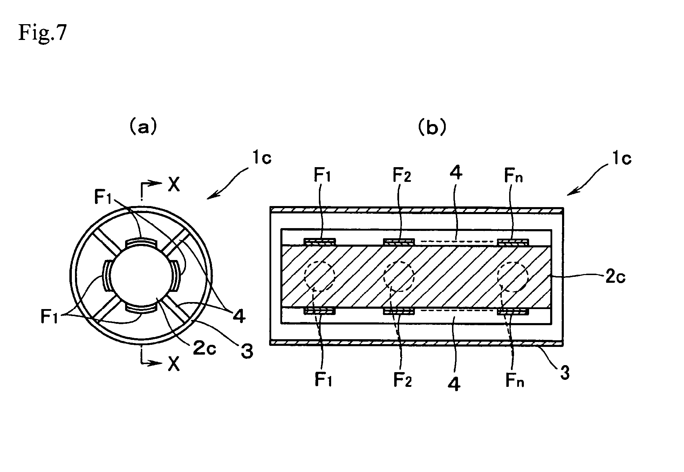

A probe array 1c, as shown in FIG. 7 (a) and 7(b), comprising a cylindrical member 3, a columned supporting member 2c housed in the hollow portion of the cylindrical member 3, and pieces F₁, F₂ ... Fₙ of the members M₁, M₂ ... Mₙ for producing a probe array attached onto the outer face of the supporting member 2c in a predetermined order, wherein the probes P₁, P₂ ... Pₙ are arranged in the hollow portion of the cylindrical member 3 in a predetermined order, can be produced according to the steps 1c, 2c and 3c below.

Step 1c: Circular sheet-like pieces F₁, F₂ ... Fₙ are produced in the same way as in step 1a.

Step 2c: A predetermined number (4 in the present embodiment) of the pieces F₁, F₂ ... Fₙ are detached from the release sheet 13 and are attached via the adhesive layer 12 onto the outer face of the supporting member 2c, at predetermined locations. Since the probes P₁, P₂ ... Pₙ and the adhesive layer 12 are provided on the different face of the substrate 11, when the pieces F₁, F₂ ... Fₙ are attached onto the supporting member 2c, the probes P₁, P₂ ... Pₙ are exposed on the supporting member 2c. The remaining pieces are kept attached to the release sheet 13, and can thereby be effectively stored for future use. Consequently, the remaining pieces can be effectively utilized.

Step 3c: The supporting member 2c on which the pieces F₁, F₂ ... Fₙ are attached in a predetermined order, is housed in the hollow portion of the cylindrical member 3. As shown in FIG. 7, spacers 4 for preventing contact between the outer face of the supporting member 2c and the inner face of the cylindrical member 3 are provided on the outer face of the supporting member 2c. Thus, the probes P₁, P₂ ... Pₙ are exposed to the hollow portion of the cylindrical member 3 when the supporting member 2c on which the pieces F₁, F₂ ... Fₙ are attached, is housed in the hollow portion of the cylindrical member 3.

The probe arrays 1a, 1b and 1c can be produced immediately, once the arrangement of the probes P₁, P₂ ... Pₙ is determined, by attaching the pieces F₁, F₂ ... Fₙ on the supporting members 2a, 2b and 2c in arrangements corresponding to the arrangements of the probes P₁, P₂ ... Pₙ. In the probe arrays 1a, 1b and 1c, the probe type can be identified on the basis of the attachment position of the pieces F₁, F₂ ... Fₙ.

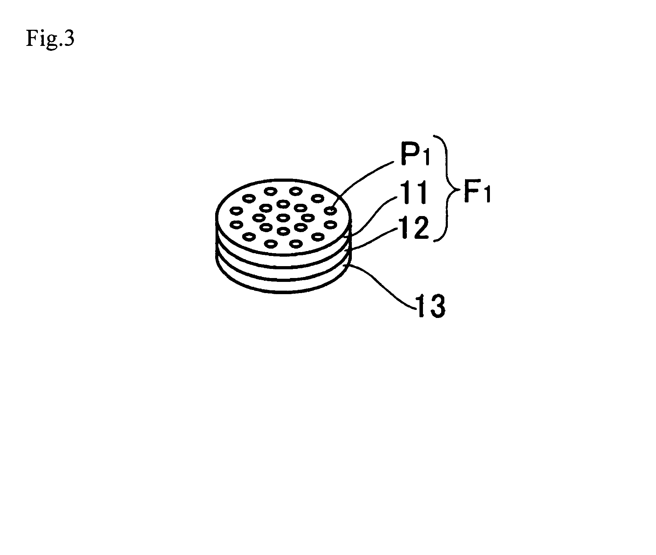

In the present embodiment, the member M₁ for producing a probe array may be cut in the thickness direction, as shown in FIG. 2, but stopping short of the release sheet 13, with the same release sheet 13 thus laminated on the adhesive layer 12 of each piece F₁. Alternatively, as shown in FIG. 3, the release sheet 13 may also be cut through, so that the adhesive layers 12 of each piece F₁ have their own release sheet 13 laminated underside. This applies also for the members M₂ ... Mₙ for producing a probe array cut through in the thickness direction.

The diameter of the pieces F₁, F₂ ... Fₙ ranges for instance from 10 µm to 10 mm. The pieces F₁, F₂ ... Fₙ in the present embodiment are circular, but they may be arbitrarily shaped. The pieces F₁, F₂ ... Fₙ may be shaped as rectangles, with side lengths ranging from 10 µm to 10 mm.

In the present embodiment, the pieces F₁, F₂ ... Fₙ are attached onto the supporting members 2a, 2b and 2c; however, if the members M₁, M₂ ... Mₙ for producing a probe array have the right size, the members M₁, M₂ ... Mₙ for producing a probe array can be attached onto the supporting members 2a, 2b and 2c without being cut.

The material of the supporting members 2a, 2b and 2c is not particularly restricted provided it is insoluble in a number of liquids used in experimental operations (e.g. a liquid sample, a washing liquid, etc.), and includes for instance the above-mentioned plastics, inorganic polymers, metals, natural polymers, glass, ceramics, etc., as well as composites thereof.

In the present embodiment, the supporting member 2a has a plate-like shape, the supporting member 2b has a cylindrical shape, and the supporting member 2c has a columned shape; however the shapes of the supporting members 2a, 2b and 2c may admit arbitrary modifications. For instance, the shape of the supporting member 2b may be a tubular shape other than cylindrical shape (for instance, hollow prismatic shape). Also, the shape of the supporting member 2c may be a sheet shape, a plate shape, a cylindrical shape, a hollow prismatic shape, a solid prismatic shape, etc. The size of the supporting members 2a, 2b and 2c may be arbitrarily adjusted as needed.

As shown in FIG. 7, the spacers 4 for preventing contact between the outer face of the supporting member 2c and the inner face of the cylindrical member 3 are provided on the outer face of the supporting member 2c. The shape and construction of the spacers 4 may be modified so long as contact between the outer face of the supporting member 2c and the inner face of the cylindrical member 3 is prevented. In the present embodiment, the spacers 4 are provided on the outer face of the supporting member 2c, but they also may be provided on the inner face of the cylindrical member 3.

As shown in FIG. 7, the size of the spacers 4 is adjusted so that when the supporting member 2c is housed in the cylindrical member 3, the tips of all the spacers 4 touch against the inner face of the cylindrical member 3; however, the size of the spacers 4 may be arbitrarily modified. The number and arrangement of the spacers 4 may also be arbitrarily modified.

The materials of the cylindrical member 3 and the spacers 4 are not particularly restricted provided they are insoluble in a liquid sample, a washing liquid, etc., and may be for instance plastics such as the aforementioned thermoplastic resins, metals such as iron, copper, aluminum, etc.; glass; ceramics, etc., as well as composites thereof.

In the production of the probe arrays 1b and 1c, the pieces F₁, F₂ ... Fₙ are attached onto curved surfaces (the inner face of the cylindrical supporting member 2b or the outer face of the columned supporting member 2c); herein, therefore, the material of the substrate 11 is preferably a flexible material (for instance, the thermoplastic resins above). Such a flexible material affords a secure adhesion of the pieces F₁, F₂ ... Fₙ to a curved surface.

Detection of target substances using the probe arrays 1a, 1b or 1c may be carried out as follows.

Step 1: A liquid sample containing the target substance bonded to a labeling substance is brought into contact with the probes P₁, P₂ ... Pₙ.

Labeling substances include for instance fluorochromes such as fluorescein, rhodamine, phycoerythrin, etc.; enzymes such as alkaline phosphatase, horseradish peroxidase, etc.; chemoluminiscent substances such as luminol, lucigenin, acridinium esters, etc.; bioluminescent substances such as luciferase, luciferin, etc. Solvents for the liquid sample can be selected in accordance with the kind of target substance, and may be for instance water, a buffer solution, or an organic solvent.

If the probe array 1a is used, for instance, the liquid sample can be added onto the probe array 1a so as to bring into contact the liquid sample and the probes P₁, P₂ ... Pₙ.

If the probe arrays 1b or 1c are used, for instance, the liquid sample can be flowed into the hollow portion of the probe arrays 1b or 1c by capillarity, using a syringe, etc. so as to bring into contact the liquid sample and the probes P₁, P₂ ... Pₙ.

Step 2: Once the liquid sample is removed, the probes P₁, P₂ ... Pₙ are washed using a wash solution. Thereby, substances other than the target substance that reacts with the probes P₁, P₂ ... Pₙ are removed.

If the probe array 1a is used, for instance, the probes P₁, P₂ ... Pₙ can be washed by adding a wash solution onto the probe array 1a.

If the probe arrays 1b or 1c are used, for instance, the probes P₁, P₂ ... Pₙ can be washed by flowing a wash solution, through capillarity, using a syringe, etc., into the hollow portion of the probe arrays 1b or 1c.

Step 3: Detection of the labeling substance bonded to the target substance is performed.

When the labeling substance is a fluorochrome, the target substance can be detected by exposure to an excitation light with detection of the emitted fluorescence using a fluorescence detector. When the labeling substance is an enzyme, the target substance can be detected by an enzymatic color reaction.

If the probe arrays 1b or 1c are used, the easy operation of flowing a liquid sample, a wash solution, etc., into and out of the hollow portion of the probe arrays 1b or 1c allows detecting target substances with a good reproducibility.

The present invention is explained in detail below by way of examples.

A 50 µm thick polyethylene terephthalate (PET) film was dipped in a poly-L-lysine solution (concentration: 0.01%, solvent: 0.1 x PBS), and was shaken for 1 hour. Next, the PET film was thoroughly washed 4 times with ultrapure water to wash off the excess poly-L-lysine. The poly-L-lysine was then coated onto the PET film by drying for 4 hours at 60°C in a vacuum oven.

An acrylic-based adhesive (PE-300 from Nippon Carbide Industries Co., Inc.) as a pressure-sensitive adhesive was applied to a thickness of 20 µm onto a release layer of a release film (PET film, thickness 38 µm) coated with silicone resin as the release agent; after drying, the release film with the adhesive was transferred to a face not coated with poly-L-lysine of the PET film coated with poly-L-lysine, to yield an adhesive film.

Probe DNA for positive control (concentration: 100 pmol/µL, solvent: ultrapure water) was applied on all faces of the above adhesive film; after drying, the adhesive film was exposed to 600 mJ ultraviolet radiation in a UV crosslinker to immobilize the probe DNA for positive control. In the same way, probe DNA for negative control was immobilized onto another adhesive film. As probe DNA for positive control was used a 200 to 500mer poly (dA), and as probe DNA for negative control was used a 200 to 500mer poly (dT).

The adhesive films with immobilized probe DNA produced above were die-cut into 2 mm diameter disks to remove unwanted sheet portions, to yield adhesive seals with immobilized probe DNA.

The release film of the adhesive seals with immobilized probe DNA for positive control was removed, and 3 adhesive seals were attached on a slide glass forming a row. In the same way, 3 adhesive seals with immobilized probe DNA for negative control were attached on the slide glass forming a row.

100 µL of hybridization solution containing target oligonucleotide (target oligonucleotide concentration: 1 pmol/ µL, yeast tRNA concentration: 1 µg/µL, solvent: 3 x SSC containing 0.2% SDS), were added to the portions of the slide glass where the adhesive seals were attached; the slide glass was covered with a gap cover glass (Matsunami Glass Ind., LTD), and was heated overnight in a thermostatic bath at 40°C. As the target oligonucleotide was used a 22mer poly(dT) bonded to biotin at the 5' end.

The slide glass was removed from the thermostatic bath and the cover glass was removed inside a container filled with wash buffer 1 (2 x SSC, 0.1%SDS). Next, the slide glass was washed by shaking for 2 minutes in wash buffer 2 (1 x SSC), and then by soaking in wash buffer 3 (0.2 x SSC), in order to wash off the nonspecifically adsorbed target oligonucleotide.

To the slide glass was added 100 µL of blocking solution (1% casein, 3 x SSC), and blocking was left to proceed for 30 minutes at room temperature. The blocking solution was removed with a pipette, and then was added 100 µL of streptavidin /alkaline phosphatase conjugate solution (stock solution diluted 2000-fold in a 0.2M NaCl, 0.1M Tris-HCl (pH 7.4), 0.05% Triton X, 1% casein solution); the reaction was left to proceed at room temperature for 30 minutes.

The slide glass was next dipped in buffer solution A (0.2M NaCl, 0.1M Tris-HCl (pH7.4), 0.05% Triton-X) for 5 minutes at room temperature. This procedure was repeated twice in order to remove the streptavidin /alkaline phosphatase conjugate not attached to the biotin bonded with the target oligonucleotide. The slide glass was next washed once in buffer solution B (0.2M NaCl, 0.1M Tris-HCl (pH7.4), 0.05% Triton-X). Finally, to the slide glass was added substrate solution (10 mL of buffer solution B, 9 µL of BCIP (5-bromo-4-chloro-3-indolyl phosphate) and 18 µL of NBT (nitroblue tetrazolium)), and the coloring reaction was left to proceed for 3 hours at room temperature.

As a result, clear signals appeared in the positions where the adhesive seals with immobilized probe DNA for positive control (complementary with the target oligonucleotide) were attached, whereas no signals appeared at all in the positions where the adhesive seals with immobilized probe DNA for negative control (not complementary with the target oligonucleotide) were attached.

## Claims

1. A member for producing a probe array comprising
a substrate,
probes immobilized on a first region of the surface of the substrate and
an adhesive layer provided on a second region of the surface of the substrate.

2. The member for producing a probe array according to claim 1, wherein the substrate is a sheet-like substrate, the first region is positioned on one face of the sheet-like substrate, and the second region is positioned on the other face of the sheet-like substrate.

3. The member for producing a probe arrays according to claim 1 or 2, wherein only one type of probes are immobilized on the first region.

4. A probe array comprising
a supporting member and
the member for producing a probe array according to any one of claims 1 to 3, or a piece thereof, arranged on the surface of the supporting member,
wherein the member for producing a probe array or the piece thereof is attached via the adhesive layer on the supporting member in such a way that the probes are exposed.

5. The probe array according to claim 4, wherein the supporting member is a tubular member, and the member for producing a probe array or the piece thereof is attached on the inner face of the tubular member.

6. The probe array according to claim 4, wherein the probe array further comprises a tubular member, and the supporting member is housed in the hollow portion of the tubular member in such a way that the probes are exposed to the hollow portion of the tubular member.

7. The probe array according to claim 6, wherein a spacer for preventing contact between the outer face of the supporting member and the inner face of the tubular member is provided on the outer face of the supporting member or on the inner face of the tubular member.

8. A method for producing a probe array comprising a supporting member, and the member for producing a probe array according to any one of claims 1 to 3, or a piece thereof, arranged on the surface of the supporting member,
the method comprising a step of attaching via the adhesive layer the member for producing a probe array or the piece thereof on the supporting member in such a way that the probes are exposed.

9. The probe array producing method according to claim 8, wherein the supporting member is a tubular member, and in the step the member for producing a probe arrays or the piece thereof is attached on the inner face of the tubular member.

10. The probe array producing method according to claim 8, wherein the probe array further comprises a tubular member, and the method further comprises a step of housing the supporting member in the tubular member in such a way that the probes are exposed to the hollow portion of the tubular member.
